# EUROPEAN PATENT SPECIFICATION

(11) **EP 4 484 832 B1**
(45) Date of publication and mention of the grant of the patent: **29.10.2025**
(21) Application number: 23181717.2
(22) Date of filing: 27.06.2023
(51) Int. Cl.: F24D 19/10, G05D 23/02

(54) **A KIT COMPRISING A CONTROL DEVICE AN ADAPTER FOR ATTACHING THE CONTROL DEVICE TO A VALVE ARRANGEMENT**
KIT MIT EINER STEUERUNGSVORRICHTUNG UND ADAPTER ZUR BEFESTIGUNG DER STEUERUNGSVORRICHTUNG AN EINER VENTILANORDNUNG
KIT COMPRENANT UN DISPOSITIF DE COMMANDE ET UN ADAPTATEUR POUR FIXER LE DISPOSITIF DE COMMANDE À UN AGENCEMENT DE SOUPAPE

(43) Date of publication of application: 01.01.2025
(73) Proprietor: IMI Hydronic Engineering International SA, 1262 Eysins (CH)
(72) Inventor: ESSFELD, Fritz, 59581 Warstein (DE); ASCHENBRENNER, Wilhelm, 59609 Anröchte (DE)
(74) Representative: Zacco Sweden AB

(56) References cited:
- EP-A1- 3 933 239
- EP-B1- 0 504 582
- EP-B1- 0 903 544
- EP-B1- 1 388 715
- DE-B4- 10 049 328

## Description

### TECHNICAL FIELD

The present disclosure relates to a kit comprising a control device and an adapter for attaching the control device to a valve arrangement and a valve assembly comprising the kit and the valve arrangement.

### BACKGROUND

A thermostatic radiator valve assembly provides a self-regulating control of fluid flow to a radiator. The thermostatic radiator valve assembly allows the temperature of a room to be controlled by changing the flow of hot water to the radiator. The thermostatic radiator valve assembly comprises a radiator valve arrangement and a thermostatic control device attached to radiator valve arrangement. The thermostatic control device may also be called a thermostatic head. The radiator valve arrangement is provided with a valve comprising a valve spindle that allows controlling an opening degree of the valve, where the opening degree of the valve controls the fluid flow through the valve arrangement. The thermostatic control device is attached to radiator valve arrangement such that the valve spindle of the valve arrangement is actuable by the thermostatic control device.

In particular, the thermostatic control device comprises a thermal actuator configured to actuate the valve spindle in dependence of an ambient temperature around the thermostatic control device. The thermal actuator comprises an actuator body, an expandable material element (typically made of liquid or gas) expandable inside the actuator body in dependence of the ambient temperature, and an actuator piston connected to the valve spindle and coupled to the expandable material element such that the actuator piston moves away from the actuator body when the expandable material element expands.

As the ambient temperature increases, the valve will gradually close by means of the expandable material element expanding, which moves the piston, which in turn moves the valve spindle. As a consequence, the amount of hot water entering the radiator is reduced as the ambient temperature increases. This enables setting a maximum temperature for a room. The thermostatic control device is typically a separate part from the radiator valve arrangement. During installment of the thermostatic radiator valve assembly, the thermostatic control device is attached to radiator valve arrangement such that the valve spindle of the radiator valve arrangement is connected to and controllable (i.e. actuable) by the thermostatic control device.

One way of way of attaching the thermostatic control device to the radiator valve arrangement is using a snap-fit connection. A problem with snap-fit connections is that such connections provide limited retention force, i.e., the force required to disengage the thermostatic control device from the radiator valve arrangement after the snap-fit connection has been formed. A limited retention force may cause unintentional disconnections of the thermostatic control device from the radiator valve arrangement. An unintentional disconnection may, e.g., happen if a person accidentally bumps into the thermostatic control device when it is attached to the radiator valve arrangement.

Document EP 0 501 582 B1 discloses a kit comprising a control device and an adapter for attaching the control device to a valve arrangement using a snap-fit connection with means for preventing the radial expansion of the snap-fit connection to the valve.

Even if known thermostatic radiator valve assemblies work well for their intended use, there is room for improved ways of attaching the thermostatic control device to the radiator valve arrangement via a snap-fit connection.

In general, there is a need for improved ways of attaching control devices to general valve arrangements, that not necessarily are for radiators, via a snap-fit connection such that a valve spindle of the valve arrangement is connected to and controllable by the control device.

### SUMMARY

An object of the present disclosure is to provide an adapter for attaching a control device to a valve arrangement that provides an improved attachment of the control device to the valve arrangement. This and other objects, which will become apparent in the following, are accomplished by a kit comprising an adapter and a control device, and a valve assembly comprising the kit and a valve arrangement, as defined in the accompanying independent claims.

According to a first aspect of the present disclosure, there is provided a kit comprising a control device and an adapter for attaching the control device to a valve arrangement such that a valve spindle of the valve arrangement is connected to and controllable by the control device.

The control device comprises a thermal actuator configured to control the valve spindle in dependence of an ambient temperature around the control device when the control device is attached to the valve arrangement via the adapter.

The adapter has an extension direction in an axial direction. A first axial end portion of the adapter is configured to engage with the valve arrangement via a first connection being a snap-fit connection. A second axial end portion of the adapter is configured to engage with the control device via a second connection.

The snap-fit connection is formed by a first interlocking part provided on an inside of the adapter engaging a second interlocking part of the valve arrangement such that the adapter is retained to the valve arrangement. The first interlocking part is movable in a resilient manner in a radial direction such that, when the adapter becomes engaged with the valve arrangement, the first interlocking part expands in the radial direction and thereafter snaps back in the radial direction to form the snap-fit connection.

The second connection is configured such that the adapter is retained to the control device and such the first interlocking part is prevented from expanding in the radial direction when the adapter is engaged with the control device via the second connection.

The adapter enables securely connecting the control device to a valve arrangement with a snap-fit interface.

The second connection is configured to increase a retention force of the snap-fit connection when the adapter is engaged with both the control device and the valve arrangement as compared with when the adapter is engaged with the valve arrangement but not the control device. The first interlocking part resists expanding in the radial direction at all times due the first interlocking part being movable in a resilient manner in the radial direction. Consequently, the snap-fit connection presents some retention force when the adapter is engaged with the valve arrangement but not the control device. By preventing the first interlocking part from expanding in the radial direction when the adapter is engaged with the control device via the second connection, the retention force of the snap-fit connection is increased.

Preventing the first interlocking part from expanding in the radial direction when the adapter is engaged with the control device via the second connection may mean, in some embodiments, that the first interlocking part cannot expand by any amount at all. In other embodiments, preventing the first interlocking part from expanding in the radial direction when the adapter is engaged with the control device via the second connection may mean that the amount the interlocking part may expand (for example due to a person trying to pull the adapter from the valve arrangement) is significantly reduced (such as ten times) as compared with when the adapter is engaged with the valve arrangement but not the control device.

According to a least one exemplary embodiment, the second connection is configured to at least double the retention force of the snap-fit connection when the adapter is engaged with both the control device and the valve arrangement as compared with when the adapter is engaged with the valve arrangement but not the control device.

Retention force refers to the force required to disengage the first interlocking part from the second interlocking part after the snap-fit connection has been formed. The increased retention force prevents unintentional disconnections of the control device from the valve arrangement.

The retention force is increased without increasing the mating force. Mating force refers to the force required to engage the first interlocking part to the second interlocking to form the snap-fit connection. Thus, the adapter provides a more secure attachment of the control device to the valve arrangement without making the attachment process more difficult.

The adapter achieves the increased retention force without separate and additional components, as compared to, e.g., an adjustable clamping ring with a screw. Consequently, manufacturing and handling of the adapter is simplified compared to other solutions requiring additional components. Furthermore, the adapter achieves the increased retention force without requiring additional actions when attaching the control device to the valve arrangement, as compared to, e.g., screwing the screw of the adjustable clamping ring. Consequently, the adapter facilitates attaching the control device to the valve arrangement.

The valve arrangement may be a radiator valve arrangement. However, the valve arrangement may be other types of valve arrangements as well, such as a control valve arrangement.

The valve spindle of the valve arrangement may also be called an actuating spindle or a shaft.

The valve arrangement may comprises a valve inlet and a valve outlet provided on the valve body. The valve arrangement may further comprises valve comprising a seat and closing member movable relative to the seat for enabling a variable cross section of a passage between the valve inlet and the valve outlet to be changed. The valve outlet is arranged downstream of the valve inlet. The valve arrangement is arranged to control a fluid flow between the valve inlet and the valve outlet. The control of fluid flow is provided by the valve, which may, e.g., be a linear valve or a rotary valve. Other types of valves are also possible. The valve spindle may be connected to the closing member. In that case, the position of the valve spindle relative to the valve body determines the opening size of the valve via the closing member. In other words, a position of the valve spindle relative to a valve body of the valve arrangement determines an opening size of a valve of the valve arrangement

If the valve is a linear valve, the closing member may move between different positions relative to the seat such that the variable cross section of the passage between the valve inlet and the valve outlet is changed. In other words, as the closing member moves closer to the seat, the amount of fluid flowing through the valve arrangement decreases. As the closing member moves away from the seat, the amount of fluid flowing through the valve arrangement increases. The closing member may be movable the axial direction. As mentioned, the closing member may be connected to the valve spindle. The valve spindle may be actuated in a linear direction along the axial direction. Furthermore, the valve spindle may extend along the axial direction.

The closing member may have a position in which the valve is considered as fully open, i.e. providing for a largest defined opening area through the valve arrangement. Similarly, the closing member may have a position in which the valve is considered as fully closed, i.e. completely blocking fluid from flowing through the valve arrangement. The opening degree of the valve may be controlled in a step-less manner. However, the opening degree may be discretely controlled in steps between the fully closed position and the fully opened position.

The first and the second axial end portions are portions at respective ends of an elongated shape of the adapter, e.g., at respective outmost portions of the adapter or in connection to the respective outermost portions of the adapter. The first axial end portion being configured to engage with the valve arrangement via a snap-fit connection and the second axial end portion being configured to engage with the control device via a threaded connection means that the adapter is configured such that the control device is attachable to one end, or in the vicinity of the one end, of the adapter, and that the valve arrangement is attachable to an opposite end, or in the vicinity of the opposite end, of the adapter.

The first interlocking part and a second interlocking part are preferably complementary in shape. For example, the first interlocking part may comprise a protrusion arranged to engage a recess forming the second interlocking part, or vice versa. The first interlocking part may comprise a combination of one or more protrusions and one or more recesses configured to engage a complementary shape of the second interlocking part.

When the first interlocking part is engaged with the second interlocking part in the snap-fit connection, the adapter is retained to the valve arrangement. This means that the adapter is attached and held to the valve arrangement.

The thermal actuator may comprise an actuator body, an expandable material element (typically made of liquid or gas) expandable inside the actuator body in dependence of the ambient temperature, and an actuator piston connected to the valve spindle and coupled to the expandable material element such that the actuator piston moves away from the actuator body when the expandable material element expands.

The control device may be provided with an adjustment mechanism configured to adjust how much the expandable material element have to move the actuator piston relative to the actuator body to close the valve. As an example, the control device may be provided with a handle rotatable relative to the valve arrangement, where the handle is manually rotatable between different positions that set respective amounts of movement. Rotation of the handle may move the actuator body between different positions relative to the valve arrangement, which in turn changes how much the expandable material element have to move the actuator piston relative to the actuator body to close the valve.

As mentioned, the first interlocking part is movable in a resilient manner in the radial direction. The radial direction is perpendicular, or substantially perpendicular, to the axial direction.

Herein, a "connection" (as in the first and the second connections) is formed by a first part of a first component engaging with a second part of a second component. When this first part is engaged with this second part in the connection, the first part is retained to the second part. This means that the first part is attached and held to the second part.

As mentioned, the second connection is configured such that the first interlocking part is prevented from expanding in the radial direction when the adapter is engaged with the control device via the second connection. This configuration of the second connection may be implemented in different ways. In a first example, the second connection is a threaded connection where threads of the adapter are configured such that the first interlocking part is prevented from expanding in the radial direction when the adapter is engaged with the control device via the threaded connection. This example is discussed in more detail below.

In a second example, the snap-fit connection constituting the first connection is a first snap-fit connection, and the second connection is a second snap-fit connection. The second snap-fit connection may be formed by a third interlocking part provided on an outside of the adapter engaging a fourth interlocking part of the control device such that the adapter is retained to the control device, and such that the first interlocking part is prevented from expanding in the radial direction when the adapter is engaged with the control device via the second connection

In a third example, the second connection is a friction fit connection. In that case, the control device may be pushed onto an outside of the adapter such that a part of the control device at least partly encapsulates the adapter, and such that the first interlocking part is prevented from expanding in the radial direction when the adapter is engaged with the control device via the second connection.

The second connection may be other types of connections than the three mentioned examples.

According to a least one exemplary embodiment, the second connection is a threaded connection. The adapter is provided with first threads arranged circumferentially with respect to the axial direction), and the control device is provided with second threads. The threaded connection is formed by the first threads engaging the second threads such that the adapter is retained to the control device. The first threads are configured such that the first interlocking part is prevented from expanding in the radial direction when the adapter is engaged with the control device via the threaded connection.

The first threads are configured to increase a retention force of the snap-fit connection when the adapter is engaged with both the control device and the valve arrangement as compared with when the adapter is engaged with the valve arrangement but not the control device.

The adapter may have a tubular shape extending in the in an axial direction A. A tubular shape means an elongated shape like a tube. Such a shape is typically round and hollow. The adapter may have the shape of a cylinder. Alternatively, the adapter may have a shape of a cylinder with a slit extending from one opening to the other opening. In that case, the cylinder does not form a solid circle when looking into the cylinder from one of the openings. The adapter may have other elongated shapes as well.

The adapter, or at least a part of the adapter, may be made of a resilient material such that when the adapter becomes engaged with the valve arrangement, the first interlocking part expands in the radial direction and thereafter snaps back in the radial direction to form the snap-fit connection. In other words, the first interlocking part is resilient. Examples, of suitable materials are plastics or metal.

Alternatively, or in combination of, the resilience of the first interlocking part may be formed at least partly mechanically, i.e., by the particular shape of the adapter. According to a least one exemplary embodiment, the first interlocking part is arranged on a protruding portion of the adapter extending in the axial direction configured to provide resilience to the first interlocking part in the radial direction.

According to a least one exemplary embodiment, the adapter is provided with a slit extending between the first axial end portion of the adapter and the second axial end portion of the adapter to provide resilience to the first interlocking part in the radial direction. This slit is arranged extending all the way from one end to the other end. This slit is arranged such that it reduces the genus of the adapter by one as compared with the same adapter without the slit. For example, if the adapter without the slit is a cylinder with one through hole, the slit is arranged such that the adapter becomes a shape with zero through holes. Such arrangement of the slit provides resilience of the whole adapter, i.e., the whole adapter can compress and expand radially in a resilient manner. Consequently, resilience is also provided to the first interlocking part in the radial direction. The adapter may additionally, or alternatively, comprise slits not extending all the way from one end to the other of the adapter, which also provide resilience to some extent.

As mentioned, the adapter may be provided with first threads arranged circumferentially with respect to the axial direction. For example, if the adapter is a cylinder, the first threads may extend circumferentially around an outside of that cylinder or circumferentially around an inside of that cylinder.

When the first threads are engaged with the second threads in the threaded connection, the adapter is retained to the control device. This means that the adapter is attached and held to the control device.

As mentioned, the first threads are configured such that the first interlocking part is prevented from expanding in the radial direction when the adapter is engaged with the control device via the threaded connection. This configuration of the first threads may be implemented in different ways. In a first example, the first threads may be arranged with an overlap in the radial direction with the first interlocking part. In a second example, the first threads are tapered towards the second axial end portion of the adapter. These two examples are discussed in more detail below.

According to a least one exemplary embodiment, the first interlocking part has a first extension in the axial direction and the first threads have a second extension in the axial direction. In that case, the second extension at least partially overlaps with the first extension with respect to the axial direction. If the adapter is viewed from an angle perpendicular to the axial direction, the first threads at least partially overlaps the first interlocking part. For example, if the adapter is 4 cm long in the axial direction, the first threads may start at one end of the adapter (at the second axial end portion) and extend 3.5 cm towards the other end, and the interlocking part may be arranged at 3 cm from the one end of the adapter and extend 0.1 cm in any direction along the axial direction. Before the connector is attached to the adapter via the threaded connection, the first interlocking part is movable in a resilient manner in the radial direction according to the discussions above. When the adapter is engaged with the control device via the threaded connection, the first threads are configured such that the first interlocking part is prevented from expanding in the radial direction due to the at least partial overlap of the first and the second extensions.

According to a least one exemplary embodiment, one end of the second extension is arranged closer in the axial direction to the first axial end portion of the adapter than to the second axial end portion of the adapter.

According to a least one exemplary embodiment, the first threads are male threads and the second threads are female threads.

According to a least one exemplary embodiment, the first threads are female threads and the second threads are male threads.

According to a least one exemplary embodiment, the first threads are female threads and the second threads are male threads, and the adapter is provided with an external envelope. In that case, the first threads are arranged on an inside of the external envelope. As an example, the adapter may comprise a main body extending in the axial direction, where the first interlocking part is arranged on an inside of the main body, and where the envelope is connected to one end of the main body and extends towards the other end of the main body circumferentially along an outside of the main body. A circumferential gap is formed between the envelope and the main body at the other end, in which the second threads of the control device may be inserted to engage the first threads. Furthermore, the second threads may be arranged on a cylindrical protrusion of the control device configured to be received in the external envelope of the adapter when the adapter becomes engaged with the control device via the threaded connection.

According to a least one exemplary embodiment, the first threads are male threads and the second threads are female threads, where the male threads and/or the female threads are tapered with respect to the axial direction. The first threads are configured to engage the second threads of the control device such that the first interlocking part is pressed inwards in the radial direction when the adapter becomes engaged with the control device via the threaded connection.

According to a least one exemplary embodiment, the first threads are tapered towards the second axial end portion of the adapter. In that case, the second threads preferably are straight threads or tapered less than the first threads. Since the first threads are tapered, an end portion of the second threads will exert a force radially inwards onto the first threads when engaged with the first threads. This force becomes larger the further the second threads are engaged with the first threads, i.e., how many turns the second threads has engaged with the first threads.

In another embodiment, the second threads are tapered such that an end portion of the second threads, which is the portion arranged to first engage the first threads as the control device engages the adapter, have a smaller circumference compared to an opposite end of the second threads. In that case, the first threads preferably are straight threads or tapered less than the second threads. Since the second threads are tapered, an end portion of the second threads will exert a force radially inwards onto the first threads when engaged with the first threads.

According to a least one exemplary embodiment, the adapter is provided with the tapered threads, and the adapter is provided with a ridge arranged circumferentially with respect to the axial direction on an outside of the adapter. The ridge comprises a surface arranged to abut an end of the control device when the adapter becomes engaged with the control device via the threaded connection.

According to a least one exemplary embodiment, the surface is frustoconical pointing towards the first axial end portion of the adapter and is associated with an apex angle, and wherein the ridge is arranged such that the apex angle expands when the adapter becomes engaged with the control device via the threaded connection. In this way, the end of the control device will push the surface of the ridge such that first interlocking part is pressed inwards in the radial direction when the adapter becomes engaged with the control device via the threaded connection. Consequently, the retention force of the snap-fit connection when the adapter is engaged with both the control device and the valve arrangement is further increased as compared with when the adapter is engaged with the valve arrangement but not the control device.

According to a least one exemplary embodiment, the adapter comprises a first anti-rotational part provided on the inside of the adapter configured to engage a second anti-rotational part of the valve arrangement such that the adapter is rotationally locked to the valve arrangement when the adapter is engaged with the valve arrangement via the snap-fit connection. The control device is rotationally locked to the adapter via the threaded connection when it is attached to the adapter. The first anti-rotational part makes the control device rotationally locked to the valve arrangement when the control device is attached to the valve arrangement via the adapter. Note that the control device may comprise a first part and a second part, where the first part is rotationally locked to the adapter via the threaded connection when the control device is attached to the adapter, and where the second part is rotatably attached to the first part.

According to a second aspect of the present disclosure, there is provided a valve assembly comprising the kit and the valve arrangement according to the discussions above. The valve assembly is associated with the above-discussed advantages. The valve arrangement comprises: a valve body having a valve inlet and a valve outlet; a valve spindle movable relative to the valve body; and a valve comprising a seat and closing member movable relative to the seat for enabling a variable cross section of a passage between the valve inlet and the valve outlet to be changed, wherein the closing member is connected to the valve spindle.

According to a third aspect of the present disclosure, there is provided a fluid distribution system comprising the valve assembly according to the discussions above. The fluid distribution system is associated with the above-discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

With reference to the appended drawings, below follows a more detailed description of embodiments of the present disclosure cited as examples. In the drawings:
Figure 1 is schematic illustration of a valve assembly comprising a control device, an adapter, and valve arrangement;
Figure 2A-2B, 3A-3B, 4A-4B, and 5A-5B show different views of a valve assembly according to a first embodiment;
Figure 6A-6D show different views of the adapter of Figures 2A-5B;
Figure 7, 8, and 9A-9B show different views of a valve assembly according to a second embodiment;
Figure 10A-10B show different views of the adapter and control device of Figures 7-9B; and
Figure 11 illustrates a fluid distribution system.

### DETAILED DESCRIPTION OF THE DRAWINGS

The present disclosure is described more fully below with reference to the accompanying drawings, in which certain aspects of the present disclosure are shown. The present disclosure may, however, be embodied in many different forms and should not be construed as limited to the embodiments and aspects set forth herein; rather, these embodiments are provided by way of example so that this disclosure will be thorough and complete, and will fully convey the scope of the present disclosure to those skilled in the art. Like numbers refer to like elements throughout the description.

It is to be understood that the present disclosure is not limited to the embodiments described herein and illustrated in the drawings; rather, the skilled person will recognize that many changes and modifications may be made within the scope of the appended claims.

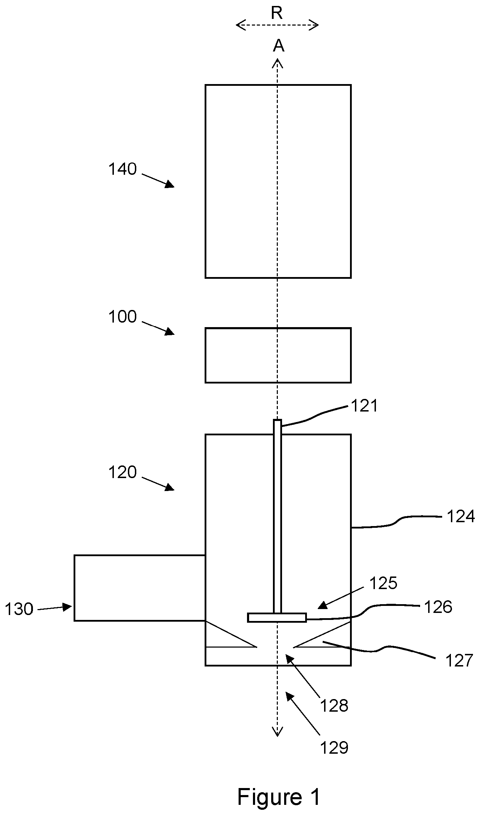

Figure 1 is a schematic illustration of an exploded view of a valve assembly comprising a control device 140, an adapter 100, and a valve arrangement 120. The valve arrangement 120 may, e.g., be a radiator valve arrangement. The valve arrangement 120 comprises a valve body 124 having a valve inlet 130 and a valve outlet 129, wherein the valve outlet 129 is arranged downstream of the valve inlet 130. The valve arrangement 120 is configured to control a fluid flow between the valve inlet 130 and the valve outlet 129 via a valve spindle 121 passing through the valve body 124. The valve spindle 121 may also be called a shaft. Furthermore, the valve spindle 121 is movable in an axial direction A and is configured to be actuated in the axial direction A to control the fluid flow thorough the valve arrangement 120. In particular, a position of the valve spindle 121 relative to the valve body 124 of the valve arrangement 120 determines an opening size of a valve 125 of the valve arrangement 120.

In Figure 1, the control of fluid flow is provided by the valve 125, which forms a linear valve. The valve 125 comprises a seat 127 and closing member 126 movable relative to the seat 127, wherein the closing member 126 is connected to the valve spindle 121. The closing member 126 is movable in the axial direction A. When the closing member 126 moves between different positions relative to the seat 127, a variable cross section of a passage between the valve inlet 130 and the valve outlet 129 is changed. In other words, as the closing member 126 moves closer to the seat 127, the amount of fluid flowing through the valve arrangement 120 decreases. As the closing member 126 moves away from the seat 127, the amount of fluid flowing through the valve arrangement 120 increases. The closing member 126 has a position in which the valve 125 is considered as fully open, i.e. providing for a largest defined opening area through the valve arrangement 120. Similarly, the closing member 126 has a position in which the valve 125 is considered as fully closed, i.e. completely blocking fluid from flowing through the valve arrangement 120 (or only allowing a small leakage flow). The opening degree of the valve 125 may, in at least some exemplary embodiments, be controlled in a step-less manner. However, in at least some exemplary embodiments, the opening degree may be discretely controlled in steps between the fully closed position and the fully opened position.

The control device 140 is configured to be attached to the valve arrangement 120 via the adapter 100 such that the valve spindle 121 of the valve arrangement 120 is connected to and controllable (i.e. actuable) by the control device 140. In Figure 1, the adapter 100 may be attached to the valve arrangement 120 by moving the adapter 100 downwards along the axial direction A, and the control device 140 may be attached to the valve arrangement 120 via the adapter 100 by moving the control device 140 downwards along the axial direction A. The adapter 100 and the control device 140 together form a kit. The kit and the valve arrangement 120 together form a valve assembly. The control device 140 comprises a thermal actuator (not shown) configured to control the valve spindle 121 in dependence of an ambient temperature around the control device 140 when the control device 140 is attached to the valve arrangement 120 via the adapter 100. In other words, the thermal actuator is configured to actuate the valve spindle 121 relative to the valve body 124 when the control device 140 is attached to the valve arrangement 120 via the adapter 100. The control device 140 may be called a thermostatic head.

The control device 140 may be provided with additional regulating means, such as an electrically controllable actuator configured to regulate the position of the valve spindle 121. Alternatively, or in combination of, the regulating means may comprise movable element (such as a handle) configured to regulate the position of the valve spindle 121 in dependence of a position of the movable element relative to the valve arrangement 120.

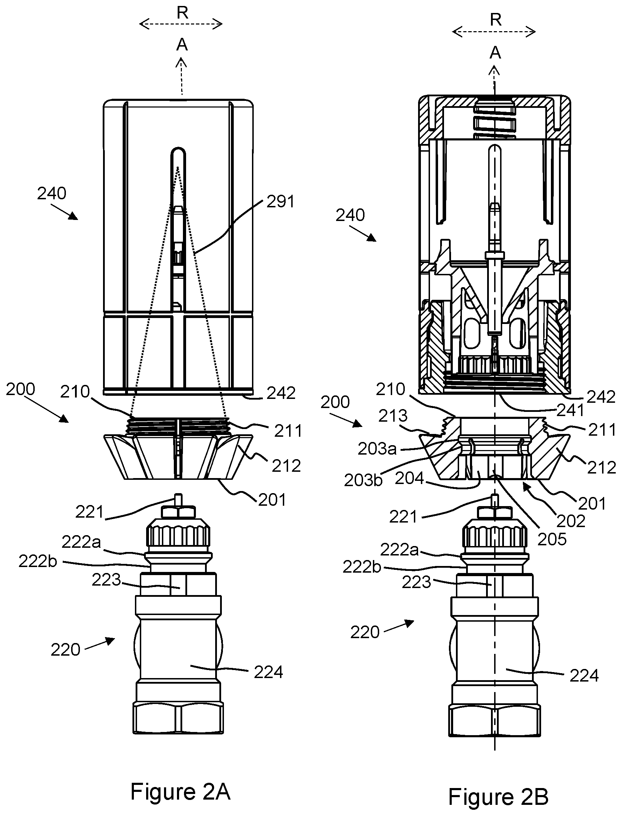

Figures 2A-2B, 3A-3B, 4A-4B, and 5A-5B show different views of a valve assembly comprising a control device 240, an adapter 200, and a valve arrangement 220.

In particular, Figures 2A-2B show an exploded view of the valve assembly. Figure 2B shows a cut of the control device 240 and the adapter 200 from the view of Figure 2A.

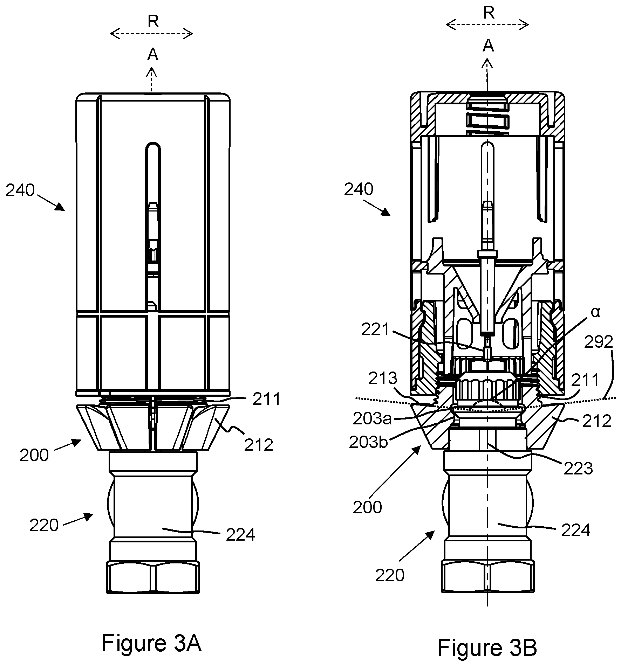

Figures 3A-3B show the valve assembly where the adapter 200 is connected to the valve arrangement 220, and where the control device 240 is about to engage the adapter 200. Figure 3B shows a cut of the control device 240 and the adapter 200 from the view of Figure 3A.

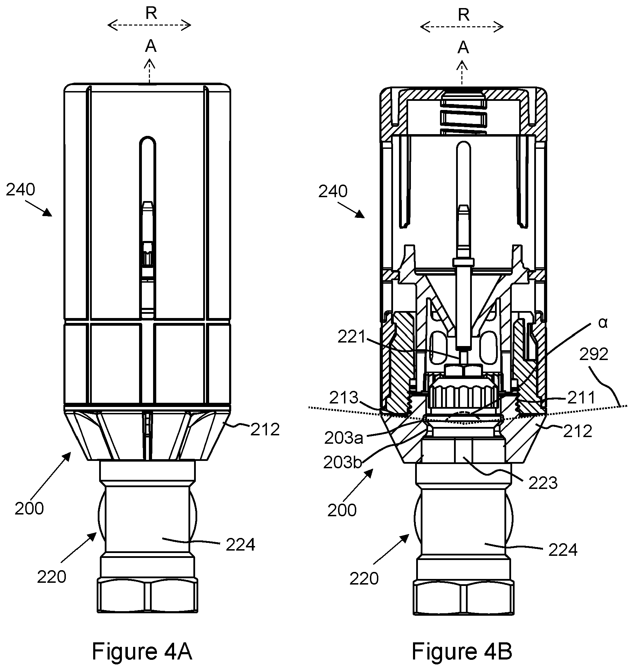

Figures 4A-4B show the valve assembly where the adapter 200 is connected to the valve arrangement 220, and where the control device 240 has engaged further with the adapter 200 compared to Figures 3A-3B. Figure 4B shows a cut of the control device 240 and the adapter 200 from the view of Figure 4A.

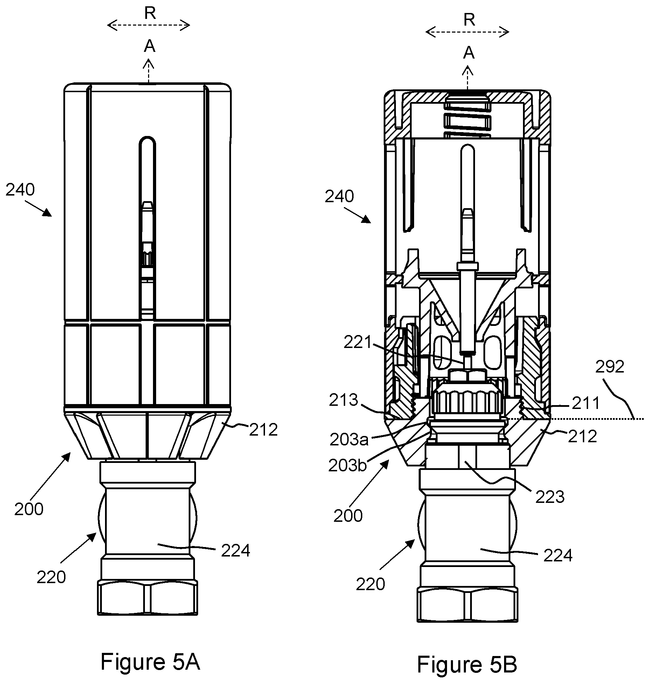

Figures 5A-4B show the valve assembly where the adapter 200 is connected to the valve arrangement 220, and where the control device 240 has fully engaged with the adapter 200. Figure 5B shows a cut of the control device 240 and the adapter 200 from the view of Figure 5A.

The valve arrangement 220 is a radiator valve arrangement. The valve arrangement 220 comprises a valve body 224. The internals of the valve arrangement 220 are not shown in the figures, but the valve arrangement 220 may operate under the same principles as the valve arrangement 120 of Figure 1. In particular, the valve arrangement 220 is configured to control a fluid flow through the valve arrangement via a valve spindle 221 passing through the valve body 224. Furthermore, the valve spindle 221 is movable in an axial direction A and is configured to be actuated in the axial direction A to control the fluid flow thorough the valve arrangement 220. In other words, a position of the valve spindle 221 relative to the valve body 224 of the valve arrangement 220 determines an opening size of a valve (not shown) of the valve arrangement 220.

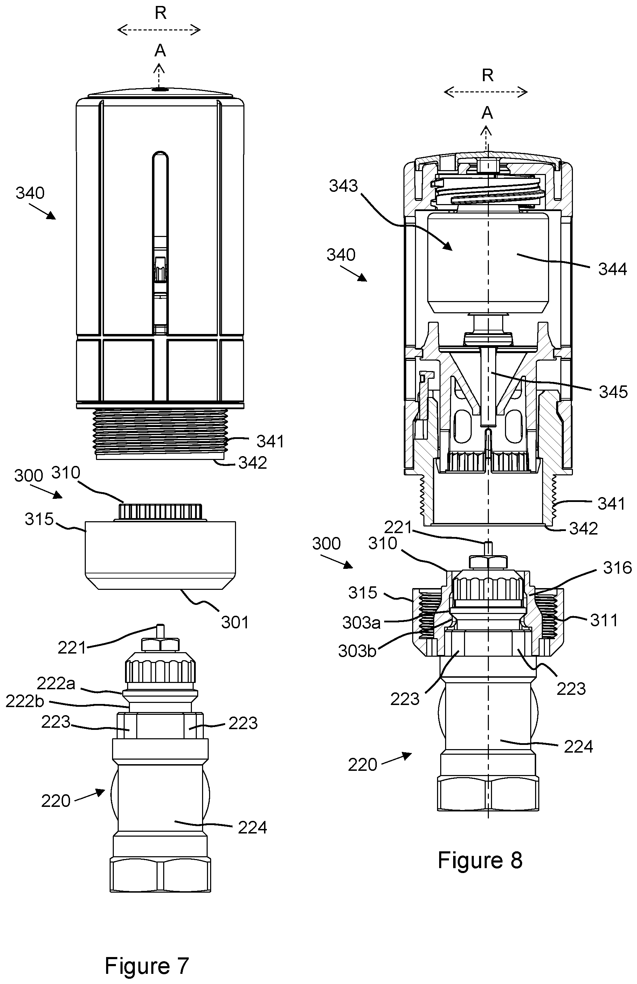

The control device 240 is configured to be attached to the valve arrangement 220 via the adapter 200 such that the valve spindle 221 of the valve arrangement 220 is connected to and controllable by the control device 240. The adapter 200 and the control device 240 together form a kit. The kit and the valve arrangement 220 together form a valve assembly. The control device 240 comprises a thermal actuator (not shown) configured to control the valve spindle 221 in dependence of an ambient temperature around the control device 240 when the control device 240 is attached to the valve arrangement 220 via the adapter 200. The operating principles of thermal actuators are explained in more detail below in connection to Figure 8.

The adapter 200 has an extension direction in an axial direction A. In particular, the adapter has a tubular shape extending in the axial direction A. A first axial end portion 201 of the adapter 200 is configured to engage with the valve arrangement 220 via a first connection being a snap-fit connection. The first axial end portion 201 may be called a forward end portion. A second axial end portion 210 of the adapter 200 is at an opposite side of the adapter 200 with respect to the axial direction A. The second axial end portion 210 may be called a rearward end portion. A direction from the rearward end portion to the forward end portion along the axial direction A is called a forward direction, and a direction from the forward end portion to the rearward end portion along the axial direction A is called a rearward direction. The adapter 200 is configured to be attached to the valve arrangement 220 by moving the forward end portion (relative to the valve arrangement 220) in the forward direction onto the valve arrangement 220.

The snap-fit connection is formed by a first interlocking part 203a, 203b provided on an inside 202 of the adapter 200 engaging a second interlocking part 222a, 222b of the valve arrangement 220 such that the adapter 200 is retained to the valve arrangement 220. The first interlocking part 203a, 203b is movable in a resilient manner in a radial direction R such that, when the adapter 200 becomes engaged with the valve arrangement 220, the first interlocking part 203a, 203b expands in the radial direction R and thereafter snaps back in the radial direction R to form the snap-fit connection.

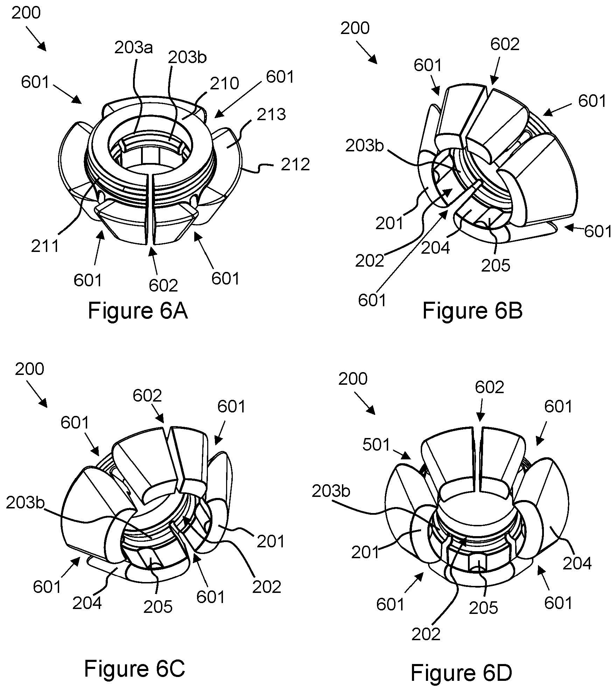

In Figure 2B, it can be seen that the second interlocking part comprises an annular protrusion 222a arranged circumferentially on the valve body 224 and arranged extending outwards in the radial direction R. Below the annular protrusion 222a of the valve arrangement 220 ("below" means in the forward direction relative to the annular protrusion 222a), an annular grove 222b is formed circumferentially on the valve body 224, which is also comprised in the second interlocking part. The first interlocking part comprises a section of an annular protrusion 203a arranged circumferentially on the inside 202 of the adapter 200 and arranged extending inwards in the radial direction R. The first interlocking part further comprises a section of an annular grove 203b formed circumferentially on the inside 202 of the adapter 200 arranged above the section of the annular protrusion 203a of the adapter 200. Here, "above" means in the rearward direction relative to the section of the annular protrusion 203a. The section of the annular protrusion 203b of the adapter 200 is snap-fitted into the annular grove 222b of the valve arrangement 220 and the section of the annular grove 203a of the adapter 200 is snap-fitted onto the annular protrusion 222a of the valve arrangement 220 when the adapter 200 is engaged with the valve arrangement 220 via the snap-fit connection. The first interlocking part 203a, 203b is discussed in more detail below in connection to Figures 6A-6D.

A second axial end portion 210 of the adapter 200 is configured to engage with the control device 240 via a second connection being a threaded connection. In particular, the adapter 200 is configured to be attached to the control device 240 by moving the reward end portion (relative to the control device 240) in the forward direction onto the control device 240. The adapter 200 is provided with first threads 211 arranged circumferentially with respect to the axial direction A. The threaded connection is formed by the first threads 211 engaging second threads 241 of the control device 240 such that the adapter 200 is retained to the control device 240. It can be seen that the first threads 211 are male threads and the second threads 241 are female threads. Furthermore, the first threads 211 are configured such that the first interlocking part 203a, 203b is prevented from expanding in the radial direction R when the adapter 200 is engaged with the control device 240 via the threaded connection.

On the adapter 200, the first threads 211 are tapered towards the second axial end portion 210 of the adapter 200. In other words, the first threads taper in the rearward direction. The tapering is illustrated by dashed lines 291 in Figure 2A. Due to the tapering, the circumference at a bottommost portion of the first threads 211 in the figure is larger than the circumference at an uppermost portion of the first threads 211 in the figure.

The first threads 211 are configured to engage the second threads 241 of the control device 240 such that the first interlocking part 203a, 203b is pressed inwards in the radial direction R when the adapter 200 becomes engaged with the control device 240 via the threaded connection. In Figure 2B, it can be seen that the female second threads 241 of the control device 240 are arranged on an inside of the control device 240 in connection to an end 242 of the control device 240. It can further be seen that the second threads 241 are straight threads. Since the first threads 211 are tapered, an end portion of the second threads 241 will exert a force radially inwards onto the first threads 211 when engaged with the first threads 211. This force becomes larger the further the second threads 241 are engaged with the first threads 211, i.e., how many turns the second threads 241 has engaged with the first threads 211. By preventing the first interlocking part 203a, 203b from expanding in the radial direction R when the adapter 200 is engaged with the control device 240 via the threaded connection, the retention force of the snap-fit connection is increased when the adapter 200 is engaged with both the control device 240 and the valve arrangement 220 as compared with when the adapter 200 is engaged with the valve arrangement 220 but not the control device 240.

The adapter 200 is provided with a ridge 212 arranged circumferentially with respect to the axial direction A on an outside of the adapter 200. The ridge 212 comprises a surface 213 arranged to abut an end 242 of the control device 240 when the adapter 200 becomes engaged with the control device 240 via the threaded connection. In Figure 3B, the ridge 212 is arranged at a bottom end of the first threads 211 and the end 242 of the control device 240 is arranged at a bottom end of the second threads 241. In particular, the first threads 211 are arranged extending from an upmost end of the adapter 200 and extend all the way to the ridge 212. Other locations of the ridge 212 relative to the first threads 211 are also possible.

The surface 213 of the ridge 212 is frustoconical pointing towards the first axial end portion 201 of the adapter 200 and is associated with an apex angle α. In other words, the surface 213 of the ridge 212 is frustoconical pointing in the forward direction. The apex angle α is illustrated via dashed lines 292 in Figures 3B and 4B. In Figure 3B, the adapter 200 is connected to the valve arrangement 220, and the control device 240 is about to engage the adapter 200. In Figure 3B, the apex angle α remains unchanged compared to when the control device 240 is not in contact with the adapter 200.

The ridge 212 is arranged such that the apex angle α expands when the adapter 200 becomes engaged with the control device 240 via the threaded connection. In Figure 4B, the control device 240 has engaged further with the adapter 200 compared to Figure 3B, and the apex angle α remains substantially the same as in Figure 3B. In Figure 5B, the control device 240 has fully engaged with the adapter 200, and the apex angle has expanded to close to 180 degrees.

As can be seen from Figures 3B, 4B, and 5B, the expansion of the apex angle α results in the first interlocking part 203a, 203b being pressed inwards in the radial direction R when the adapter 200 becomes engaged with the control device 240 via the threaded connection. Consequently, the retention force of the snap-fit connection when the adapter 200 is engaged with both the control device 240 and the valve arrangement 220 is increased as compared with when the adapter 200 is engaged with the valve arrangement 220 but not the control device 240.

Furthermore, as can be seen from Figures 3B, 4B, and 5B, the tapering of the first threads 211 is reduced (i.e. the first threads 211 become closer to straight threads) as the control device 240 becomes more and more engaged with the adapter 200 when the adapter 200 is engaged with the valve arrangement 220.

Figures 6A-6D show different views of the adapter 200 of Figures 2A-5B. It can be seen that the adapter 200 is provided with a slit 602 extending between the first axial end portion 201 of the adapter 200 and the second axial end portion 210 of the adapter 200 to provide resilience to the first interlocking part 203a, 203b in the radial direction R. This slit 602 is arranged extending all the way from one end to the other end of the adapter 200. This slit 602 is arranged such that it reduces the genus of the adapter 200 by one as compared with the same adapter without the slit 602. In particular, the adapter 200 has a shape with zero through holes. The arrangement of the slit 602 provides resilience of the whole adapter 200, i.e., the whole adapter 200 can compress and expand radially in a resilient manner. Consequently, resilience is also provided to the first interlocking part 203a, 203b in the radial direction R.

Figures 6A-6D further show that the adapter 200 comprises four respective first interlocking parts 203. Each first interlocking part 203a, 203b is arranged on a protruding portion 204 of the adapter 200 extending in the axial direction A. The protruding portion 204 is configured to provide resilience to the first interlocking part 203a, 203b in the radial direction R. The first threads 211 are formed on the second axial end portion 210 (top part in Figure 6A) of the adapter 200 forming a C-shape together with the slit 602. The four protruding portions 204 extend in the forward direction from the end part. The four protruding portions 204 form openings 601 between each adjacent protruding portion 204. One of the protruding portions 204 is divided into two parts by the slit 602.

The adapter 200 comprises a first anti-rotational part 205 provided on the inside 202 of the adapter 200 configured to engage a second anti-rotational part 223 of the valve arrangement 220 such that the adapter 200 is rotationally locked to the valve arrangement 220 when the adapter 200 is engaged with the valve arrangement 220 via the snap-fit connection. In Figures 6A-6D, the adapter 200 comprises four respective first anti-rotational parts 205 in the form of part-cylindrical protrusions arranged on respective protruding portion 204. The second anti-rotational part 223 can be seen in Figure 2A, for example. The valve arrangement 220 comprises four respective second anti-rotational parts 223 arranged circumferentially on the valve body 224. Each second anti-rotational part 223 has a complementary shape to the first anti-rotational part 205, which in this case is a part-cylindrical recess.

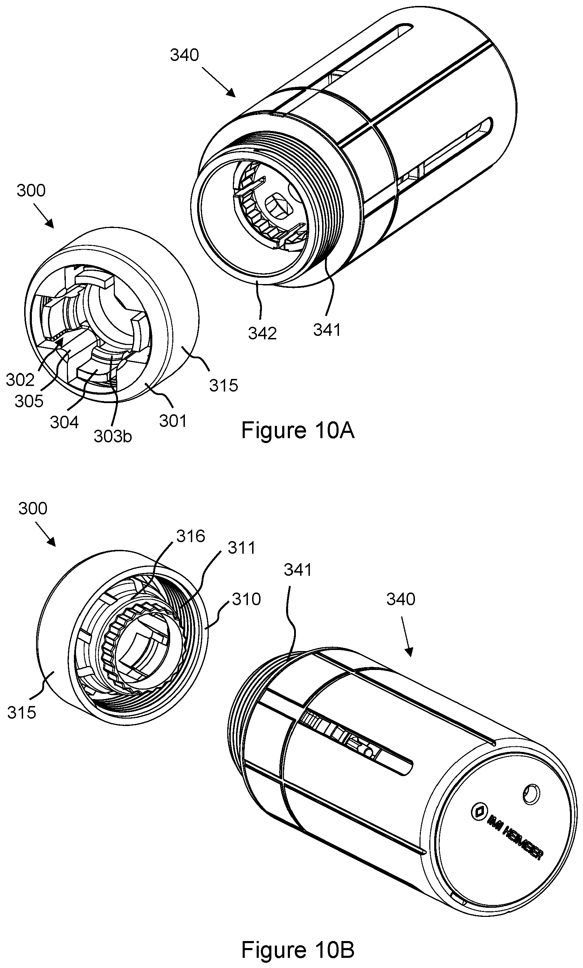

Figures 7, 8, and 9A-9B show different views of a valve assembly comprising a control device 340, an adapter 300, and a valve arrangement 220. The valve arrangement 220 of Figures 7-9B is the same valve arrangement 220 as is shown Figures 2A-5B. Figures 10A-10B show different views of the control device 340 and the adapter 300.

In particular, Figure 7 shows an exploded view of the valve assembly. Figure 8 shows a cut of the valve assembly, wherein the adapter 300 is connected to the valve arrangement 220, and wherein the control device 340 is about to engage the adapter 300.

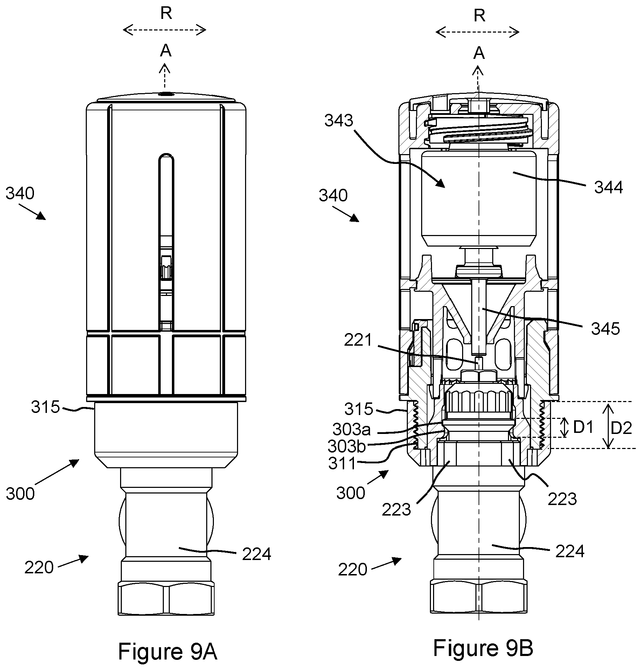

Figures 9A-9B show the valve assembly, wherein the adapter 300 is connected to the valve arrangement 220, and wherein the control device 340 has fully engaged with the adapter 300. Figure 9B shows a cut of the control device 340 and the adapter 300 from the view of Figure 9A.

The control device 340 is configured to be attached to the valve arrangement 220 via the adapter 300 such that the valve spindle 221 of the valve arrangement 220 is connected to and controllable by the control device 340. The adapter 300 and the control device 340 together form a kit. The kid and the valve arrangement 220 together form a valve assembly. The control device 340 comprises a thermal actuator 343 configured to control the valve spindle 221 in dependence of an ambient temperature around the control device 340 when the control device 340 is attached to the valve arrangement 220 via the adapter 300.

The thermal actuator 343 comprises an actuator body 344, an expandable material element (typically made of liquid or gas) expandable inside the actuator body 344 in dependence of the ambient temperature, and an actuator piston 345 connected to the valve spindle 221 (when the control device 340 is attached to the valve arrangement 220 via the adapter 300) and coupled to the expandable material element such that the actuator piston 345 moves away from the actuator body 344 when the expandable material element expands.

The adapter 300 has an extension direction in an axial direction A. In particular, the adapter 300 has a tubular shape extending in the axial direction A. A first axial end portion 301 of the adapter 300 is configured to engage with the valve arrangement 220 via a snap-fit connection. The snap-fit connection is formed by a first interlocking part 303a, 303b provided on an inside 302 of the adapter 300 engaging a second interlocking part 222a, 222b of the valve arrangement 220 such that the adapter 300 is retained to the valve arrangement 220. The first interlocking part 303a, 303b is movable in a resilient manner in a radial direction R such that, when the adapter 300 becomes engaged with the valve arrangement 220, the first interlocking part 303a, 303b expands in the radial direction R and thereafter snaps back in the radial direction R to form the snap-fit connection.

As mentioned, the second interlocking part comprises an annular protrusion 222a arranged circumferentially on the valve body 224 and arranged extending outwards in the radial direction R. Below the annular protrusion 222a (downward in the figures), an annular grove 222b is formed circumferentially on the valve body 224. The first interlocking part comprises a section of an annular protrusion 303b arranged circumferentially on the inside 302 of the adapter 300 and arranged extending inwards in the radial direction R. The first interlocking part further comprises a section of an annular grove 303a formed circumferentially on the inside 302 of the adapter 300 arranged above (upward in the figures) the section of the annular protrusion of the adapter 300. The section of the annular protrusion 303b of the adapter 300 is snap-fitted into the annular grove 202b of the valve arrangement 220, and the section of the annular grove 303a of the adapter 300 is snap-fitted onto the annular protrusion 202a of the valve arrangement 220 when the adapter 300 is engaged with the valve arrangement 220 via the snap-fit connection. The first interlocking part 303a, 303b is discussed in more detail below in connection to Figures 10A-10B.

A second axial end portion 310 of the adapter 300 is configured to engage with the control device 340 via a second connection being a threaded connection. The adapter 300 is provided with first threads 311 arranged circumferentially with respect to the axial direction A. The threaded connection is formed by the first threads 311 engaging second threads 341 of the control device 340 such that the adapter 300 is retained to the control device 340. It can be seen that the first threads 311 are female threads and the second threads 341 are male threads.

The first threads 311 are configured such that the first interlocking part 303a, 303b is prevented from expanding in the radial direction R when the adapter 300 is engaged with the control device 340 via the threaded connection. By preventing the first interlocking part 303a, 303b from expanding in the radial direction R when the adapter 300 is engaged with the control device 340 via the threaded connection, the retention force of the snap-fit connection is increased when the adapter 300 is engaged with both the control device 340 and the valve arrangement 220 as compared with when the adapter 300 is engaged with the valve arrangement 220 but not the control device 340.

As is illustrated in Figure 9B, the first interlocking part 303a, 303b has a first extension D1 in the axial direction A, and the first threads 311 have a second extension D2 in the axial direction A. The second extension D2 overlaps with the first extension D1 with respect to the axial direction A. Consequently, the first interlocking part 303a, 303b is prevented from expanding in the radial direction R when the adapter 300 is engaged with the control device 340 via the threaded connection.

As is illustrated further in Figure 9B, one end of the second extension D2 is arranged closer in the axial direction A to the first axial end portion 301 of the adapter 300 than to the second axial end portion 310 of the adapter 300.

The adapter 300 is provided with an external envelope 315, where the first threads 311 are arranged on an inside of the external envelope 315. As is shown in Figure 8 and 10A-10B, the adapter 300 comprises a main body 316 extending in the axial direction A, where the first interlocking part 303a, 303b is arranged on an inside of the main body 316, and where the envelope 315 is connected to one end of the main body 316 and extends towards the other end of the main body circumferentially along an outside of the main body 316. A circumferential gap is formed between the envelope and the main body at the other end, in which the second threads 341 of the control device 340 may be inserted to engage the first threads 311.

Figures 10A-10B show different views of the adapter 300 and the control device 340 of Figures 7, 8, and 9A-9B. It can be seen that the adapter 300 comprises four respective first interlocking parts 303a, 303b. Each first interlocking part 303a, 303b is arranged on a protruding portion 304 of the adapter 300 extending in the axial direction A. The protruding portion 304 is configured to provide resilience to the first interlocking part 303a, 303b in the radial direction R. The four protruding portions 304 extend in the axial direction A from the second axial end portion 310 towards the first axial end portion 301 on the inside 302 of the adapter 300.

The adapter 300 comprises a first anti-rotational part 305 provided on the inside 302 of the adapter 300 configured to engage a second anti-rotational part 223 of the valve arrangement 220 such that the adapter 300 is rotationally locked to the valve arrangement 220 when the adapter 300 is engaged with the valve arrangement 220 via the snap-fit connection. In Figures 10A-10B, the adapter 300 comprises four respective first anti-rotational parts 305 in the form of part-cylindrical protrusions arranged on the inside 302 of the adapter 300. As mentioned, the second anti-rotational part 223 can be seen in Figure 2A, for example.

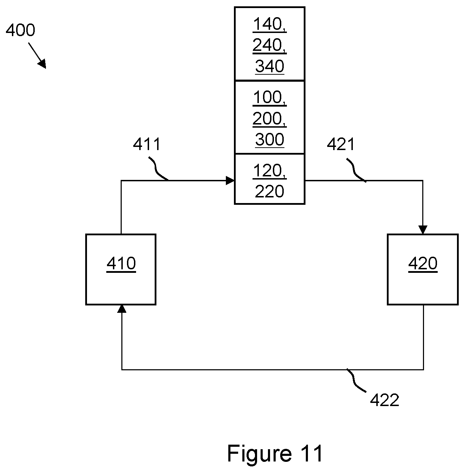

There is also disclosed herein a fluid distribution system 400 comprising a valve assembly according to the discussions above. Figure 11 shows a schematic illustration of an example fluid distribution system 400. The valve assembly comprises a control device 140, 240, 340, an adapter 100, 200, 300, and a valve arrangement 120, 220. The fluid distribution system 400 of Figure 11 comprises a fluid source 410, such as a liquid tank, and fluid consumption point 420, such as a radiator. Relative to the valve assembly, upstream 411 is between the fluid source 410 and the valve assembly and downstream 421 is between the valve assembly and the consumption point 420. Fluid is recirculated from the fluid consumption point 420 to the fluid source 410 via a return path 422.

## Claims

1. A kit comprising a control device (140, 240, 340) and an adapter (100, 200, 300) for attaching the control device (140, 240, 340) to a valve arrangement (120, 220) such that a valve spindle (121, 221) of the valve arrangement (120, 220) is connected to and controllable by the control device (140, 240, 340),
wherein the control device (140, 240, 340) comprises a thermal actuator (343) configured to control the valve spindle (121, 221) in dependence of an ambient temperature around the control device (140, 240, 340) when the control device (140, 240, 340) is attached to the valve arrangement (120, 220) via the adapter (100, 200, 300),
wherein the adapter (100, 200, 300) has an extension direction in an axial direction (A), wherein a first axial end portion (201, 301) of the adapter (100, 200, 300) is configured to engage with the valve arrangement (120, 220) via a first connection being a snap-fit connection, and wherein a second axial end portion (210, 310) of the adapter (100, 200, 300) is configured to engage with the control device (140, 240, 340) via a second connection,
wherein the snap-fit connection is formed by a first interlocking part (203a, 203b, 303a, 303b) provided on an inside (202, 302) of the adapter (100, 200, 300) engaging a second interlocking part (222a, 222b) of the valve arrangement (120, 220) such that the adapter (100, 200, 300) is retained to the valve arrangement (120, 220), and wherein the first interlocking part (203a, 203b, 303a, 303b) is movable in a resilient manner in a radial direction (R) such that, when the adapter (100, 200, 300) becomes engaged with the valve arrangement (120, 220), the first interlocking part (203a, 203b, 303a, 303b) expands in the radial direction (R) and thereafter snaps back in the radial direction (R) to form the snap-fit connection,
wherein the second connection is configured such that the adapter (100, 200, 300) is retained to the control device (140, 240, 340) and such the first interlocking part (203a, 203b, 303a, 303b) is prevented from expanding in the radial direction (R) when the adapter (100, 200, 300) is engaged with the control device (140, 240, 340) via the second connection.

2. The kit according to claim 1, wherein the second connection is a threaded connection, and wherein the adapter (100, 200, 300) is provided with first threads (211, 311) arranged circumferentially with respect to the axial direction (A), and wherein the control device is provided with second threads (241, 341), and wherein the threaded connection is formed by the first threads (211, 311) engaging the second threads (241, 341) such that the adapter (100, 200, 300) is retained to the control device (140, 240, 340), and wherein the first threads (211, 311) are configured such that the first interlocking part (203a, 203b, 303a, 303b) is prevented from expanding in the radial direction (R) when the adapter (100, 200, 300) is engaged with the control device (140, 240, 340) via the threaded connection.

3. The kit according to claim 1 or 2, wherein the second connection is configured to at least double a retention force of the snap-fit connection when the adapter (100, 200, 300) is engaged with both the control device (140, 240, 340) and the valve arrangement (120, 220) as compared with when the adapter (100, 200, 300) is engaged with the valve arrangement but not the control device (140, 240, 340).

4. The kit according to claim 2 or claim 3 when dependent on claim 2, wherein the first interlocking part (303a, 303b) has a first extension (D1) in the axial direction (A), and wherein the first threads (311) have a second extension (D2) in the axial direction (A), wherein the second extension at least partially overlaps with the first extension with respect to the axial direction (A).

5. The kit according to claim 4, wherein one end of the second extension (D2) is arranged closer in the axial direction (A) to the first axial end portion (301) of the adapter (300) than to the second axial end portion (310) of the adapter (300).

6. The kit according to claim 2 or any previous claim when dependent on claim 2, wherein the first threads (311) are female threads and the second threads (341) are male threads.

7. The kit according to claim 6, wherein the adapter (300) is provided with an external envelope (315), and wherein the first threads (311) are arranged on an inside of the external envelope (315).

8. The kit according to claim 2 or any of claims 1,3-5 when dependent on claim 2, wherein the first threads (211) are male threads and the second threads (241) are female threads.

9. The kit according to claim 8, wherein the male threads (211) and/or the female threads (241) are tapered with respect to the axial direction (A), wherein the first threads (211) are configured to engage the second threads (241) of the control device (240) such that the first interlocking part (203a, 203b) is pressed inwards in the radial direction (R) when the adapter (200) becomes engaged with the control device (240) via the threaded connection.

10. The kit according to claim 9, wherein the first threads (211) are tapered towards the second axial end portion (210) of the adapter (200).

11. The kit according to claim 10, wherein the adapter (200) is provided with a ridge (212) arranged circumferentially with respect to the axial direction (A) on an outside of the adapter (200), and wherein the ridge (212) comprises a surface (213) arranged to abut an end (242) of the control device (240) when the adapter (200) becomes engaged with the control device (240) via the threaded connection.

12. The kit according to claim 11, wherein the surface (213) is frustoconical pointing towards the first axial end portion (201) of the adapter (200) and is associated with an apex angle (α), and wherein the ridge (212) is arranged such that the apex angle (α) expands when the adapter (200) becomes engaged with the control device (240) via the threaded connection.

13. The kit according to any previous claim, wherein the first interlocking part (203a, 203b, 303a, 303b) is arranged on a protruding portion (204, 304) of the adapter (200, 300) extending in the axial direction (A) configured to provide resilience to the first interlocking part (203a, 203b, 303a, 303b) in the radial direction (R).

14. The kit according to any previous claim, comprising a first anti-rotational part (205, 305) provided on the inside (202, 302) of the adapter (200, 300) configured to engage a second anti-rotational part (223) of the valve arrangement (220) such that the adapter (200, 300) is rotationally locked to the valve arrangement (220) when the adapter (200, 300) is engaged with the valve arrangement (220) via the snap-fit connection.

15. The kit according to any previous claim, wherein the adapter (200) is provided with a slit (602) extending between the first axial end portion (201) of the adapter (200) and the second axial end portion (210) of the adapter (200) to provide resilience to the first interlocking part (203a, 203b) in the radial direction (R).

16. A valve assembly comprising a valve arrangement (120, 220) and the kit according to any of claims 1-15, wherein the valve arrangement (120, 220) comprises: a valve body (124, 224) having a valve inlet (130) and a valve outlet (129); a valve spindle (121, 221) movable relative to the valve body (124, 224); and a valve (125) comprising a seat (127) and closing member (126) movable relative to the seat (127) for enabling a variable cross section of a passage between the valve inlet (130) and the valve outlet (129) to be changed, wherein the closing member is connected to the valve spindle (121, 221).

## Patentansprüche

1. Kit, umfassend eine Steuerungsvorrichtung (140, 240, 340) und einen Adapter (100, 200, 300) zur Befestigung der Steuerungsvorrichtung (140, 240, 340) an einer Ventilanordnung (120, 220), sodass eine Ventilspindel (121, 221) der Ventilanordnung (120, 220) mit der Steuerungsvorrichtung (140, 240, 340) verbunden und durch diese steuerbar ist,
wobei die Steuerungsvorrichtung (140, 240, 340) einen thermischen Aktor (343) umfasst, der dazu konfiguriert ist, die Ventilspindel (121, 221) in Abhängigkeit von einer Umgebungstemperatur um die Steuerungsvorrichtung (140, 240, 340) zu steuern, wenn die Steuerungsvorrichtung (140, 240, 340) über den Adapter (100, 200, 300) an der Ventilvorrichtung (120, 220) befestigt ist,
wobei der Adapter (100, 200, 300) eine Erstreckungsrichtung in einer axialen Richtung (A) aufweist, wobei ein erster axialer Endabschnitt (201, 301) des Adapters (100, 200, 300) dazu konfiguriert ist, mit der Ventilanordnung (120, 220) über eine erste Verbindung in Eingriff zu treten, bei der es sich um eine Schnappverbindung handelt, und wobei ein zweiter axialer Endabschnitt (210, 310) des Adapters (100, 200, 300) dazu konfiguriert ist, mit der Steuerungsvorrichtung (140, 240, 340) über eine Verbindung in Eingriff zu treten,
wobei die Schnappverbindung dadurch gebildet wird, dass ein erstes ineinandergreifendes Teil (203a, 203b, 303a, 303b), das an einer Innenseite (202, 302) des Adapters (100, 200, 300) bereitgestellt ist, ein zweites ineinandergreifendes Teil (222a, 222b) der Ventilanordnung (120, 220) in Eingriff nimmt, sodass der Adapter (100, 200, 300) an der Ventilanordnung (120, 220) gehalten wird, und wobei das erste ineinandergreifende Teil (203a, 203b, 303a, 303b) auf nachgiebige Weise in einer radialen Richtung (R) bewegbar ist, sodass, wenn der Adapter (100, 200, 300) mit der Ventilanordnung (120, 220) in Eingriff tritt, sich das erste ineinandergreifende Teil (203a, 203b, 303a, 303b) in der radialen Richtung (R) erweitert und danach in der radialen Richtung (R) zurückschnappt, um die Schnappverbindung zu bilden, wobei die zweite Verbindung so konfiguriert ist, dass der Adapter (100, 200, 300) an der Steuerungsvorrichtung (140, 240, 340) gehalten wird und dass das erste ineinandergreifende Teil (203a, 203b, 303a, 303b) daran gehindert wird, sich in der radialen Richtung (R) erweitert, wenn der Adapter (100, 200, 300) über die zweite Verbindung mit der Steuerungsvorrichtung (140, 240, 340) in Eingriff steht.

2. Kit nach Anspruch 1, wobei die zweite Verbindung eine Gewindeverbindung ist, und wobei der Adapter (100, 200, 300) mit ersten Gewinden (211, 311) versehen ist, die in Bezug auf die axiale Richtung (A) umläufig angeordnet sind, und wobei die Steuerungsvorrichtung mit zweiten Gewinden (241, 341) versehen ist, und wobei die Gewindeverbindung dadurch gebildet wird, dass die ersten Gewinde (211, 311) mit den zweiten Gewinden (241, 341) in Eingriff treten, sodass der Adapter (100, 200, 300) an der Steuerungsvorrichtung (140, 240, 340) gehalten wird, und wobei die ersten Gewinde (211, 311) so konfiguriert sind, dass das erste ineinandergreifende Teil (203a, 203b, 303a, 303b) daran gehindert wird, sich in der radialen Richtung (R) zu erweitern, wenn der Adapter (100, 200, 300) über die Gewindeverbindung mit der Steuerungsvorrichtung (140, 240, 340) in Eingriff steht.

3. Kit nach Anspruch 1 oder 2, wobei die zweite Verbindung dazu konfiguriert ist, eine Haltekraft der Schnappverbindung, wenn der Adapter (100, 200, 300) mit sowohl der Steuerungsvorrichtung (140, 240, 340) als auch der Ventilanordnung (120, 220) in Eingriff steht, im Vergleich dazu, wenn der Adapter (100, 200, 300) mit der Ventilanordnung, aber nicht mit der Steuerungsvorrichtung (140, 240, 340) in Eingriff steht, mindestens zu verdoppeln.

4. Kit nach Anspruch 2 oder 3, wenn von Anspruch 2 abhängig, wobei das erste ineinandergreifende Teil (303a, 303b) eine erste Erstreckung (D1) in der axialen Richtung (A) aufweist, und wobei die ersten Gewinde (311) eine zweite Erstreckung (D2) in der axialen Richtung (A) aufweisen, wobei die zweite Erstreckung die erste Erstreckung in Bezug auf die axiale Richtung (A) zumindest teilweise überlappt.

5. Kit nach Anspruch 4, wobei ein Ende der zweiten Erstreckung (D2) in der axialen Richtung (A) näher an dem ersten axialen Endabschnitt (301) des Adapters (300) als an dem zweiten axialen Endabschnitt (310) des Adapters (300) angeordnet ist.

6. Kit nach Anspruch 2 oder einem vorstehenden Anspruch, wenn von Anspruch 2 abhängig, wobei die ersten Gewinde (311) Innengewinde sind und die zweiten Gewinde (341) Außengewinde sind.

7. Kit nach Anspruch 6, wobei der Adapter (300) mit einer Außenhülle (315) versehen ist, und wobei die ersten Gewinde (311) an einer Innenseite der Außenhülle (315) angeordnet sind.

8. Kit nach Anspruch 2 oder einem der Ansprüche 1, 3 bis 5, wenn von Anspruch 2 abhängig, wobei die ersten Gewinde (211) Außengewinde sind und die zweiten Gewinde (241) Innengewinde sind.

9. Kit nach Anspruch 8, wobei die Außengewinde (211) und/oder die Innengewinde (241) in Bezug auf die axiale Richtung (A) konisch sind und wobei die Außengewinde (211) dazu konfiguriert sind, die zweiten Gewinde (241) der Steuerungsvorrichtung (240) in Eingriff zu nehmen, sodass das erste ineinandergreifende Teil (203a, 203b) in der radialen Richtung (R) nach innen gepresst wird, wenn der Adapter (200) mit der Steuerungsvorrichtung (240) über die Gewindeverbindung in Eingriff tritt.

10. Kit nach Anspruch 9, wobei der die ersten Gewinde (211) hin zu dem zweiten axialen Endabschnitt (210) des Adapters (200) konisch sind.

11. Kit nach Anspruch 10, wobei der Adapter (200) mit einem Grat (212) versehen ist, der umlaufend in Bezug auf die axiale Richtung (A) an einer Außenseite des Adapters (200) angeordnet ist, und wobei der Grat (212) eine Fläche (213) umfasst, die dazu angeordnet ist, an ein Ende (242) der Steuerungsvorrichtung (240) anzugrenzen, wenn der Adapter (200) mit der Steuerungsvorrichtung (240) über die Gewindeverbindung in Eingriff tritt.

12. Kit nach Anspruch 11, wobei die Fläche (213) kegelstumpfförmig ist, in Richtung des ersten axialen Endabschnitts (201) des Adapters (200) zeigt und einem Öffnungswinkel (α) zugeordnet ist und wobei der Grat (212) so angeordnet ist, dass sich der Öffnungswinkel (α) erweitert, wenn der Adapter (200) mit der Steuerungsvorrichtung (240) über die Gewindeverbindung in Eingriff tritt.

13. Kit nach einem vorhergehenden Anspruch, wobei das erste ineinandergreifende Teil (203a, 203b, 303a, 303b) an einem hervorstehenden Abschnitt (204, 304) des Adapters (200, 300) angeordnet ist, der sich in der axialen Richtung (A) erstreckt und dazu konfiguriert ist, dem ersten ineinandergreifenden Teil (203a, 203b, 303a, 303b) in der radialen Richtung (R) Nachgiebigkeit zu verleihen.

14. Kit nach einem vorhergehenden Anspruch, umfassend ein erstes Drehsicherungsteil (205, 305), das an der Innenseite (202, 302) des Adapters (200, 300) bereitgestellt ist und dazu konfiguriert ist, ein zweites Drehsicherungsteil (223) der Ventilanordnung (220) in Eingriff zu nehmen, sodass der Adapter (200, 300) mit der Ventilanordnung (220) drehverriegelt ist, wenn der Adapter (200, 300) mit der Ventilanordnung (220) über die Schnappverbindung in Eingriff steht.

15. Kit nach einem vorhergehenden Anspruch, wobei der Adapter (200) mit einem Schlitz (602) versehen ist, der sich zwischen dem ersten axialen Endabschnitt (201) des Adapters (200) und dem zweiten axialen Endabschnitt (210) des Adapters (200) erstreckt, um dem ersten ineinandergreifenden Teil (203a, 203b) in der radialen Richtung (R) Nachgiebigkeit zu verleihen.

16. Ventilbaugruppe, umfassend eine Ventilanordnung (120, 220) und den Kit nach einem der Ansprüche 1 bis 15, wobei die Ventilanordnung (120, 220) umfasst: einen Ventilkörper (124, 224), der einen Ventileinlass (130) und einen Ventilauslass (129) aufweist; eine Ventilspindel (121, 221), die relativ zu dem Ventilkörper (124, 224) bewegbar ist; und ein Ventil (125), das einen Sitz (127) und ein Verschlusselement (126) umfasst, das relativ zu dem Sitz (127) bewegbar ist, um zu ermöglichen, dass ein variabler Querschnitt eines Durchgangs zwischen dem Ventileinlass (130) und dem Ventilauslass (129) geändert wird, wobei das Verschlusselement mit der Ventilspindel (121, 221) verbunden ist.

## Revendications

1. Kit comprenant un dispositif de commande (140, 240, 340) et un adaptateur (100, 200, 300) permettant de fixer le dispositif de commande (140, 240, 340) à un agencement de soupapes (120, 220) de telle sorte qu'une tige de soupape (121, 221) de l'agencement de soupapes (120, 220) soit reliée au dispositif de commande (140, 240, 340) et puisse être commandée par celui-ci,
dans lequel le dispositif de commande (140, 240, 340) comprend un actionneur thermique (343) configuré pour commander la tige de soupape (121, 221) en fonction de la température ambiante autour du dispositif de commande (140, 240, 340) lorsque le dispositif de commande (140, 240, 340) est fixé à l'agencement de soupapes (120, 220) via l'adaptateur (100, 200, 300),
dans lequel l'adaptateur (100, 200, 300) présente une direction d'extension dans une direction axiale (A), dans lequel une première partie d'extrémité axiale (201, 301) de l'adaptateur (100, 200, 300) est configurée pour s'engager avec l'agencement de soupapes (120, 220) via une première connexion étant une connexion à encliquetage, et dans lequel une seconde partie d'extrémité axiale (210, 310) de l'adaptateur (100, 200, 300) est configurée pour s'engager avec le dispositif de commande (140, 240, 340) via une seconde connexion,
dans lequel la connexion à encliquetage est formée par une première partie de verrouillage (203a, 203b, 303a, 303b) agencée à l'intérieur (202, 302) de l'adaptateur (100, 200, 300) s'engageant dans une seconde partie de verrouillage (222a, 222b) de l'agencement de soupapes (120, 220) de telle sorte que l'adaptateur (100, 200, 300) soit retenu sur l'agencement de soupapes (120, 220), et dans lequel la première partie de verrouillage (203a, 203b, 303a, 303b) est mobile de manière élastique dans une direction radiale (R) de telle sorte que, lorsque l'adaptateur (100, 200, 300) s'engage dans l'agencement de soupapes (120, 220), la première partie de verrouillage (203a, 203b, 303a, 303b) se dilate dans la direction radiale (R) et se réenclenche ensuite dans la direction radiale (R) pour former la connexion à encliquetage,
dans lequel la deuxième connexion est configurée de telle sorte que l'adaptateur (100, 200, 300) est retenu sur le dispositif de commande (140, 240, 340) et de telle sorte que la première partie de verrouillage (203a, 203b, 303a, 303b) est empêchée de s'étendre dans la direction radiale (R) lorsque l'adaptateur (100, 200, 300) est engagé avec le dispositif de commande (140, 240, 340) via la deuxième connexion.

2. Kit selon la revendication 1, dans lequel la seconde connexion est une connexion filetée, et dans lequel l'adaptateur (100, 200, 300) est pourvu de premiers filetages (211, 311) agencés circonférentiellement par rapport à la direction axiale (A), et dans lequel le dispositif de commande est pourvu de seconds filetages (241, 341), et dans lequel la connexion filetée est formée par les premiers filetages (211, 311) engageant les seconds filetages (241, 341) de telle sorte que l'adaptateur (100, 200, 300) est retenu sur le dispositif de commande (140, 240, 340), et dans lequel les premiers filetages (211, 311) sont configurés de telle sorte que la première partie de verrouillage (203a, 203b, 303a, 303b) ne puisse pas se dilater dans la direction radiale (R) lorsque l'adaptateur (100, 200, 300) est en prise avec le dispositif de commande (140, 240, 340) via la connexion filetée.

3. Kit selon la revendication 1 ou 2, dans lequel la seconde connexion est configurée pour au moins doubler une force de rétention de la connexion à encliquetage lorsque l'adaptateur (100, 200, 300) est en prise avec le dispositif de commande (140, 240, 340) et l'agencement de soupapes (120, 220) par rapport au moment où l'adaptateur (100, 200, 300) est en prise avec l'agencement de soupapes mais pas avec le dispositif de commande (140, 240, 340).

4. Kit selon la revendication 2 ou la revendication 3 lorsqu'elle dépend de la revendication 2, dans lequel la première partie de verrouillage (303a, 303b) présente une première extension (D1) dans la direction axiale (A), et dans lequel les premiers filetages (311) présentent une seconde extension (D2) dans la direction axiale (A), dans lequel la seconde extension chevauche au moins partiellement la première extension par rapport à la direction axiale (A).

5. Kit selon la revendication 4, dans lequel une extrémité de la seconde extension (D2) est agencée plus proche dans la direction axiale (A) de la première partie d'extrémité axiale (301) de l'adaptateur (300) que de la seconde partie d'extrémité axiale (310) de l'adaptateur (300).

6. Kit selon la revendication 2 ou toute revendication précédente lorsqu'elle dépend de la revendication 2, dans lequel les premiers filetages (311) sont des filetages femelles et les seconds filetages (341) sont des filetages mâles.

7. Kit selon la revendication 6, dans lequel l'adaptateur (300) est pourvu d'une enveloppe externe (315), et dans lequel les premiers filetages (311) sont agencés à l'intérieur de l'enveloppe externe (315).

8. Kit selon la revendication 2 ou l'une quelconque des revendications 1, 3 à 5 lorsqu'elles dépendent de la revendication 2, dans lequel les premiers filetages (211) sont des filetages mâles et les seconds filetages (241) sont des filetages femelles.

9. Kit selon la revendication 8, dans lequel les filetages mâles (211) et/ou les filetages femelles (241) sont coniques par rapport à la direction axiale (A), dans lequel les premiers filetages (211) sont configurés pour s'engager dans les seconds filetages (241) du dispositif de commande (240) de telle sorte que la première partie de verrouillage (203a, 203b) soit pressée vers l'intérieur dans la direction radiale (R) lorsque l'adaptateur (200) s'engage avec le dispositif de commande (240) via la connexion filetée.

10. Kit selon la revendication 9, dans lequel les premiers filetages (211) sont coniques vers la seconde partie d'extrémité axiale (210) de l'adaptateur (200).

11. Kit selon la revendication 10, dans lequel l'adaptateur (200) est pourvu d'une arête (212) agencée circonférentiellement par rapport à la direction axiale (A) sur l'extérieur de l'adaptateur (200), et dans lequel l'arête (212) comprend une surface (213) agencée pour venir en butée contre une extrémité (242) du dispositif de commande (240) lorsque l'adaptateur (200) s'engage avec le dispositif de commande (240) via la connexion filetée.

12. Kit selon la revendication 11, dans lequel la surface (213) est tronconique et pointe vers la première partie d'extrémité axiale (201) de l'adaptateur (200) et est associée à un angle au sommet (α), et dans lequel la crête (212) est agencée de telle sorte que l'angle au sommet (α) s'élargit lorsque l'adaptateur (200) s'engage avec le dispositif de commande (240) via la connexion filetée.

13. Kit selon l'une quelconque des revendications précédentes, dans lequel la première partie de verrouillage (203a, 203b, 303a, 303b) est agencée sur une partie saillante (204, 304) de l'adaptateur (200, 300) s'étendant dans la direction axiale (A) configurée pour fournir une élasticité à la première partie de verrouillage (203a, 203b, 303a, 303b) dans la direction radiale (R).

14. Kit selon l'une quelconque des revendications précédentes, comprenant une première partie anti-rotation (205, 305) prévue à l'intérieur (202, 302) de l'adaptateur (200, 300) configurée pour s'engager dans une seconde partie anti-rotation (223) de l'agencement de soupapes (220) de telle sorte que l'adaptateur (200, 300) est verrouillé en rotation sur l'agencement de soupapes (220) lorsque l'adaptateur (200, 300) est engagé avec l'agencement de soupapes (220) via la connexion à encliquetage.

15. Kit selon l'une quelconque des revendications précédentes, dans lequel l'adaptateur (200) est pourvu d'une fente (602) s'étendant entre la première partie d'extrémité axiale (201) de l'adaptateur (200) et la seconde partie d'extrémité axiale (210) de l'adaptateur (200) pour fournir une élasticité à la première partie de verrouillage (203a, 203b) dans la direction radiale (R).

16. Ensemble de soupapes comprenant un agencement de soupapes (120, 220) et le kit selon l'une quelconque des revendications 1 à 15, dans lequel l'agencement de soupapes (120, 220) comprend : un corps de soupape (124, 224) ayant une entrée de soupape (130) et une sortie de soupape (129) ; une tige de soupape (121, 221) mobile par rapport au corps de soupape (124, 224) ; et une soupape (125) comprenant un siège (127) et un élément de fermeture (126) mobile par rapport au siège (127) pour permettre de modifier la section transversale variable d'un passage entre l'entrée de soupape (130) et la sortie de soupape (129), l'élément de fermeture étant relié à la tige de soupape (121, 221).
